# EUROPEAN PATENT SPECIFICATION

(11) **EP 2 621 996 B1**
(45) Date of publication and mention of the grant of the patent: **27.05.2015**
(21) Application number: 11764440.1
(22) Date of filing: 22.09.2011
(51) Int. Cl.: C08G 59/06, C08K 5/17

(54) **EPOXY COMPOSITION WITH CRYSTALLIZATION INHIBITION**
EPOXIDZUSAMMENSETZUNG MIT KRISTALLISIERUNGSHEMMUNG
COMPOSITION D'ÉPOXY AVEC INHIBITION DE LA CRISTALLISATION

(30) Priority: 28.09.2010 US 387308 P
(43) Date of publication of application: 07.08.2013
(73) Proprietor: Dow Global Technologies LLC, Midland, MI 48674 (US)
(72) Inventor: DETTLOFF, Marvin, L., Lake Jackson, TX 77566 (US); KARUNAKARAN, Krishnan, R., Lake Jackson, TX 77566 (US)
(74) Representative: Beck Greener
(86) International application number: PCT/US2011/052808
(87) International publication number: WO 2012/047537

(56) References cited:
- WO-A1-96/15172
- US-A- 3 477 981
- US-A- 3 666 702
- US-A- 3 694 407
- US-A- 4 316 003
- DATABASE WPI Week 197601 Thomson Scientific, London, GB; AN 1976-00651X XP002682153, & JP 50 012142 A (ASAHI ELECTROCHEMICAL CO LTD) 7 February 1975 (1975-02-07)

## Description

### Field of the Invention

The invention relates to an epoxy resin composition with improved crystallization resistance.

### Background of the Invention

Standard epoxy resins based on Bisphenol A are often blended with 10 to 50 wt % of the diglycidyl ether of Bisphenol F (DGEBF) to reduce the tendency of such Bisphenol A-based resins to crystallize during storage and to moderate the viscosity of Bisphenol. A-based resins. DGEGF offers several advantages over other known crystallization inhibiting resins, such as o-cresol glycidyl ether (GGE) or p-tert-butylphenyl glycidyl ether. For example, DGEBF does not adversely affect the mechanical properties of cured thermosets, has similar chemical reactivity as liquid Bisphenol A epoxy resins (DGEBA), has a well established track record as a crystallization inhibitor for liquid DGEBA epoxy resins, and greatly reduces the viscosity of liquid DGEBA epoxy resins.

In some applications, DGEBF has been reported to perform better than DGEBA resins. For example, DGEBF permits the use of increased filler amounts in casting formulations which leads to increased crack resistance and lover cost. Additionally, high resistance to cathodic disbondiment is observed in power coating applications using DGEBF-based formulations. While DGEBF offers a good range of performance attributes when combined with DGEBA, there are times when supplies of DGEBF are variable and on some occasions, DGEBF shortages occur. Such unpredictability and unreliability of DGEBF supply may result in additional manufacturing costs for those products utilizing such resins. Non-aromatic amines are known for the purpose of improving crystallization inhibition in Bisphenol A epoxy resin composition from US-A-3477981, US-A-3666702 and JP-A-50012142.

Therefore, alternatives to DGEBF are continually being sought for use with Bisphenol A-based epoxy resin composition to provide improved crystallization resistance while maintaining or improving other performance attributes at an affordable price.

### Summary of the Invention

A first embodiment of the invention provides an epoxy resin composition comprising the reaction product of a mixture comprising between 95 and 99 wt% of an epoxy component comprising one or more diglycidyl ethers of Bisphenol A and between 1 and 5 wt% of an additive component comprising one or more aromatic amines, wherein each aromatic amine contains no more than two amine hydrogen atoms.

Another embodiment of the invention provides a method of using the inventive epoxy resin composition comprising incorporating the epoxy resin composition into a coating, an adhesive, a sealant, a casting, a laminate, or a composite.

In an alternative embodiment, the instant invention provides a epoxy resin composition and a method of using the same, in accordance with of the preceding embodiments, except that
the aromatic amine is selected from aniline, ortho-toluidine, meta-toluidine, para-toluidine, 4-propylaniline, 4-ethyniline, 3-chloroaniline, 4-hydroxyaniline, 3-cyanoaniline 2,4-dimethylaniline, 2,6-dimethylaniline, N,N'-dimethylbenzene-1,4-diamine, 1-naphthalenamine, and combinations and mixtures thereof. In specific embodiments, the aromatic amine is aniline.

In an alternative embodiment, the instant invention provides a epoxy resin composition and a method of using the same, in accordance with any of the preceding embodiments, except that the mixture comprises between 1.3 and 2.5 wt% aromatic amine and 98.7 and 97.5 wt% diglycidyl ether of Bisphenol A. In alternative embodiments, mixture comprises 97.5 wt% diglycidyl ether of Bisphenol A and 2.5 wt% aniline.

In an alternative embodiment, the instant invention provides a epoxy resin composition and a method of using the same, in accordance with any of the preeeding embodiments, except that the diglycidyl ether of Bisphenol A has an epoxy equivalent weight between 172 and 176 g/equivalent and a viscosity of 6,000 cP at 25 °C (1 PaS = 1,000 FcP). In alternative embodiments, ether diglycidyl ether of Bisphenol A has an epioxide equivalent weight between 182 and 192 g/equivalent and a viscosity of between 11,000 and 14,000 cP at 25 °C. In yet other embodiments, the diglycidyl ether of Bisphenol A has an epoxide equivalent weight between 176 and 183 g/equivalent and a viscosity of between 9,000 and: 10,500 cP at 25 °C.

In an alternative embodiment, the instant invention provides a epoxy resin composition and a method of using the same, in accordance with any of the preceding embodiments, except that the epoxy resin composition exhibit improved crystallization inbihition over unmodified diglycidyl ether of Bisphenol A.

Another embodiment of the invention provides an epoxy resin composition consisting essentially of the reaction product of a mixture comprising between 95 and 99 wt% diglycidyl ether of Bisphenol A and between 1 and 5 wt% of aromatic amine containing no more than two amine hydrogen atoms.

### Detailed Description of Embodiments of the Invention

One aspect of the invention provides an epoxy resin composition comprising the reaction product of a mixture comprising between 85 and 99 wt% of an epoxy component comprising one or more diglycidyl ethers of Bisphenol A with between 1 and 15 weight percent of an additive component comprising one or more aromatic amine containing no more than two amine hydrogen atoms. All individual values and sub-ranges from 1 to 15 percent weight are included herein and disclosed herein; for example, the weight percent of the aromatic amine may be from a lower limit of 1, 3, 5, 7, 10, or 12 weight percent to an upper limit of 4, 6, 8, 10, 12, or 15 weight percent, based on the total weight of the DGEBA epoxy composition. For example, the weight percent of the amine may be in the range of from 1 to 15 weight percent, or in the alternative, from 5 to 10 weight percent or in the alternative, from 7 to 15 weight percent, based on the total weight of the DGEBA epoxy composition.

In some embodiments of the epoxy resin composition, the mixture comprises between 1.3 and 2,5 wt% aromatic amine and 98.7 and 97.5 wt% diglycidyl ether of Bisphenol A. All individual values and sub-ranges from 1.3 to 2.5 percent by weight are included herein and disclosed herein; for example, the weight percent of the aromatic amine may be from a lower limit of 1.3, 1.5, 1.7, 1.9, 2.1, or 2.3 weight percent to an upper limit of 1.5, 1.7, 1.9, 2.1, 2.3 or 2.5 weight percent, based on the total weight of the DGEBA epoxy composition. For example, the weight percent of the aromatic amine may he in the range of from 1.3 to 2.5 weight percent, or in the alternative, from 1.5 to 2.0 weight percent, or in the alternative, from 1.7 to 2.1 weight percent, based on the total weigt of the DGEBA epoxy composition.

In a preferred embodiment the epoxy resin composition comprises the reaction producf of a mixture which comprises 97.5 wt% diglycidyl ether of Bisphenol A and 2.5 wt% of aniline.

The aromatic amine may contain one amine hydrogen atoms or two amine hydrogen atoms.

In some embodiments of the invention the aromatic amine may comprise one or more aromatic amines, wherein each aromatic amine has no more than 2 amine hydrogen atoms.

Another aspect of the invention provides such an amine-modified DGEBA epoxy ccmposition which exhibits improved crystallization resistance over DGEBA epoxy.

In certain aspects of the invention, aromatic amines useful in producing the inventive amine-modified DGEBA epoxy compositions include, by way of example, aniline, ortho-toluidine, meta-toluidine, para-toluidine, 4-propylaniline, 4-ethylaniline, 3-chloroaniline, 4-hydroxyaniline, 3-cyanoaniline, 2,4-dimethylaniline, 2,6-dimethylaniline, N,N'-dimethylbenzene-1,4-diamine, 1-naphthalelamine, N-methylaniline, N-ethylaniline, N-methyl-p-toluidine, N-methyl -o-toluidine, N-methyl-m-toluidine, N-methyl-p-propylamine and mixtures thereof.

Liquid epoxy resins suitable for use in the invention include those derive from the reaction product of Bisphenol A with epichlorohydrin. Commercially available examples of such useful liquid epoxy resins include those available from (1) the Dow Chemical Company, and sold as D.E.R.™ 330, D.E.R.™ 331, or D.E.R.™ 383; (2) Hexion Specialty Chemicals Company and sold as EPON™ 828; (3) Huntsman International LLC and sold as ARALDITE™ GY 6010; (4) Nan Ya Plastics Corp. (Taiwan) and sold as NPEL-128; and (5) Dalian Quiha (Peoples Republic of China) and sold as DYD-I28. In various embodiments of the inventive epoxy composition, one or more liquid epoxy resins derived from the reaction product of Bisphenol A and epichlorohydrin may be used.

The inventive epoxy resin compositions exhibit improved crystallization inhibition over unmodified diglycidyl ether of Bisphenol A. As used herein, "improved crystallization inhibition over unmodified diglycidyl ether of Bisphenol A" means that that the inventive resin composition will remain in Stages A & B combined for at least 30% greater time period before entering Stage C, as measured by ISO method 4895, than the unmodified diglycidyl ether of Bisphenol A. In some embodiments, the inventive epoxy resins remain in Stages A and/or B for at least 10 days, or in the alternative, for at least 20 days, in the alternative, for at least 30 days, or in the alternative, for at least 40 days, or in the alternative, for at least 60 days.

In some embodiments of the invention, the inventive epoxy compositions may be used in one or more applications, including by way of example, coatings, adhesives, sealants, castings, laminates and composites.

### Test Methods

### Crystallization Resistance Study

ISO method 4895 was used to evaluate the crystallization resistance of resin blends. The calcium carbonate was conditioned in an oven for 3h at 125 °C, and then equilibrated at room temperature. DGEBF and DGEBA samples were heated in an oven for 16h at 60 °C to melt any crystals and equilibrated at room temperature for 1h. Each tested epoxy resin (20g), conditioned calcium carbonate (20g), and ethanol (2g) were added to a 4-oz glass bottle and manually mixed for 2 minutes using a glass stirring rod.

The bottle containing the mixed ingredients was sealed with a plastic screw cap then placed in the vertical position in a refrigerator at 10 °C. The following morning the sample was removed from the refrigerator and equilibrated at approximately 22 °C for about 1h. The bottle was then placed in the horizontal position for 1 minute. The sample was observed and the flow ranked as follows:
Stage A: sample flowed and reached the bottle neck within a minute.
Stage B: sample flowed and did not reach the bottle neck.
Stage C: no observable sample flow.

After recording the initial stage of the sample flow, the sample was manually mixed for one minute using a glass rod and returned to the refrigerator. The samples were processed daily in this manner. The samples were discarded when their flow reached Stage C or after 60 days of testing. The tendency of a sample to crystallize was expressed as the time the sample was in Stages A and B. Thus, the longer the time a sample remains in Stage A and B, the less tendency that sample has to crystallize.

### Inventive and Comparative Examples

The following examples illustrate the present invention but are not intended to limit the scope of the invention.

Table 1 describes the base epoxy resins used in the comparative and inventive examples.

**Table 1**

| **Material** | **Tradename** | **Available from** | **Epoxide equivalent weight (g/equivalent)** | **Viscosity (cP @ 25°C)** |
|---|---|---|---|---|
| Diglycidyl ether of Bisphenol A | D.E.R™ 332 | The Dow Chemical | 172 - 176 | 4,000-6,000 |
| Diglycidyl ether of Bisphenol A | D.E.R.™ 331 | The Dow Chemical Company | 182 - 192 | 11,000-14,000 |
| Diglycidyl ether of Bisphenol A | D.E.R. ™ 383 | The Dow Chemical Company | 176 - 183 | 9,000-10,500 |
| Diglycidyl ether of Bisphenol F | D.E.R. ™ 354 | The Dow Chemical Company | 158 - 175 | 3,000-3,000 |

Other chemicals used included the following:
VICRON™ 41-8 food grade limestone (i.e., calcium carbonate) (available from Specially Materials, Adams, MA); and ethanol obtained from Sigma-Aldrich Co.

To prepare the inventive examples, a diglycidyl other of Bisphenol A, as described in Table 1, was added to a 4 oz glass bottle followed by the dropwise addition of aniline to give the targeted weight percent of aniline in the mixture. The mixture was heated to 60°C and shaken well to achieve a homogeneous mixtures. The bottle was then placed in an oven at 80 °C for 3 hours with occasional stirring. After 3 hours the mixture was cooled to room temperature and tested for crystallization inhibition. The comparative examples were preconditioned by heating in an oven for 16 hours at 60 °C to melt any crystal present and then equilibrated at room temperature for one hour prior to crystallization inhibition testing. Table 2 below shows the composition of each inventive and comparative example as well as the results of the crystallization inhibition testing according la ISO method 4895.

**Table 2**

| **Composition** | **Number of Days in Stage A** | **Number of Days in Stage B** |
|---|---|---|
| **Compositions bases on D.E.R.™ 332** | | |
| Comparative Example 1 (D.E.R. ™ 332) | 0 | 1 |
| Comparative Example 2 (D.E.R. ™ 333 + 14 w% D.E.R. ™ 354) | 5 | 10 |
| Inventive Example 1 (D.E.R. ™ 332 + 1.3 wt% aniline) | 2 | 1 |
| Inventive Example 2 (D.E.R. ™ 332 + 2.5 wt% aniline) (D.E.R. ™ 332 + | 3 | 1 |
| | | |

| **Compositions based on D.E.R. ™ 383** | | |
|---|---|---|
| Comparative Example 3 (D.E.R. ™ 383) | 4 | 6 |
| Comparative Example 4 (D.E.R. ™ 383 + 14 wt% D.E.R. ™ 354) | 60 | * |
| Inventive Example 3 (D.E.R. ™ 383 + 1.3 wt% aniline) | 5 | 10 |
| Inventive Example 4 (D.E.R.™ 383 + 2.5 wt% aniline) | 60 | * |
| | | |

| **Compositions based on D.E.R. ™ 331** | | |
|---|---|---|
| Comparative Example 5 (D.E.R. ™ 331) | 7 | 2^{.} |
| Comparative Example 6 (D.E.R. ™ 331 + 14 wt% D.E.R ™ 354) | 32 | 4 |
| Inventive Example 5 (D.E.R. ™ 331 + 13 wt% aniline) | 23 | 15 |
| Inventive Example 6 (D.E.R. ™ 331 + 2.5 wt% aniline) | | 60 * |

| | | |
|---|---|---|
| *Remained in Stage A at the end of 60 days, at which time the test was terminated. | | |

The comparative examples show the crystallization tendency of the Bisphenol A diglycidyl ether epoxy resins with no additive as well as with 14 weight percent D.E.R.™ 354 (DGEBF). As can be seen. D.E.R.™ 332 (Comparative Example 1) shows rapid entry into Stages B and C. That is, D.E.R. ™ 332 rapidly exhibits crystallization when not modified by the presence of DGEBF or aniline. The aromatic amine modification of D.E.R. ™ 332 improves crystallization resistance compared to the D.E.R. ™ 332 resin without modification.

The aromatic amine modification significantly improves the crystallization resistance of the unmodified D.E.R. ™ 383 and D.E.R. ™ 331. At a 2.5 wt% aniline level modification. D.E.R.™ 383 and D.E.R.™ 331 resins remained in Stage B through the sixtieth day of crystallization testing.

## Claims

1. An epoxy resin composition comprising the reaction product of a mixture comprising between 95 and 99 wt% of an epoxy component comprising one or more diglycidyl ethers of Bisphenol A and between 1 and 5 wt% of an additive component comprising one or more aromatic amines, wherein each aromatic amine contains no more than two amine hydrogen, atoms; wherein the epoxy resin composition exhibits improved crystallization inhibition over the diglycidyl ether of Bisphenol A.

2. The epoxy resin composition of claim 1 wherein the one or more aromatic amines are selected from aniline, ortho-toluidine, meta-toluidine, para-toluidine, 4-propylaniline, 4-ethylaniline, 3-chloroaniline, 4-hydroxyaniline, 3-cyanoaniline, 2,4-dimethylaniline, 2,6-dimethylaniline, N,N'-dimethylbenzene-1,4-diamine,1 -naphthalenamine, and combinations and mixtures thereof

3. The epoxy resin composition of any of the preceding Claims wherein the one or more aromatic amines comprises aniline.

4. The epoxy resin composition of claim 1 wherein the mixture comprises between 98.7 and 97.5 wt% diglycidyl ether of Bisphenol A and between 1.3 and 2.5 wt% aromatic amine.

5. The epoxy resin composition of claim 4 wherein the mixture comprises 97.5 wt% diglycidyl ether of Bisphenol A and 2.5 wt% of aniline.

6. The epoxy resin composition of any of the preceding Claims wherein the diglycidyl ether of Bisphenol A has an epoxide equivalent weight between 172 and 176 g/equivalent and a viscosity between 4 and 6 Pa·s (4,000 and 6,000 cP) at 25 °C.

7. The epoxy resin composition of any of the preceding Claims wherein the diglycidyl ether of Bisphenol A has an epoxide equivalent weight between 182 and 192 g/equivalent and a viscosity between 11 and 14 Pa·s (11,000 and 14,000 cP) at 25 °C.

8. The epoxy resin composition of any of the preceding Claims wherein the diglycidyl ether of Bisphenol A has an epoxide equivalent weight between 176 and 183 g/equivalent and a viscosity of between 9 and 10.5 Pa·s (9,000 and 10,500 cP) at 25 °C.

9. A method of using the epoxy resin composition of any of the preceding claims comprising incorporating the epoxy resin composition into a coating, an adhesive, a sealant, a casting, a laminate, or a composite.

## Patentansprüche

1. Eine Epoxidharzzusammensetzung, beinhaltend das Reaktionsprodukt einer Mischung, beinhaltend zwischen 95 und 99 Gew.-% eine Epoxidkomponente, beinhaltend einen oder mehrere Diglycidylether von Bisphenol A und zwischen 1 und 5 Gew.-% eine Additivkomponente, beinhaltend ein oder mehrere aromatische Amine, wobei jedes aromatische Amin nicht mehr als zwei Aminwasserstoffatome enthält; wobei die Epoxidharzzusammensetzung gegenüber dem Diglycidylether von Bisphenol A eine verbesserte Kristallisationshemmung darstellt.

2. Epoxidharzzusammensetzung gemäß Anspruch 1, wobei das eine oder die mehreren aromatischen Amine ausgewählt ist/sind aus Anilin, o-Toluidin, m-Toluidin, p-Toluidin, 4-Propylanilin, 4-Ethylanilin, 3-Chloranilin, 4-Hydroxyanilin, 3-Cyananilin, 2,4-Dimethylanilin, 2,6-Dimethylanilin, N,N'-Dimethylbenzen-1,4-diamin,1-naphthalinamin und Kombinationen und Mischungen davon.

3. Epoxidharzzusammensetzung gemäß einem der vorhergehenden Ansprüche, wobei das eine oder die mehreren aromatischen Amine Anilin beinhaltet/beinhalten.

4. Epoxidharzzusammensetzung gemäß Anspruch 1, wobei die Mischung zwischen 98,7 und 97,5 Gew.-% Diglycidylether von Bisphenol A und zwischen 1,3 und 2,5 Gew.-% aromatisches Amin beinhaltet.

5. Epoxidharzzusammensetzung gemäß Anspruch 4, wobei die Mischung 97,5 Gew.-% Diglycidylether von Bisphenol A und 2,5 Gew.-% Anilin beinhaltet.

6. Epoxidharzzusammensetzung gemäß einem der vorhergehenden Ansprüche, wobei der Diglycidylether von Bisphenol A ein Epoxid-Äquivalentgewicht zwischen 172 und 176 g/Äquivalent und eine Viskosität zwischen 4 und 6 Pa.s (4000 und 6000 cP) bei 25 °C aufweist.

7. Epoxidharzzusammensetzung gemäß einem der vorhergehenden Ansprüche, wobei der Diglycidylether von Bisphenol A ein Epoxid-Äquivalentgewicht zwischen 182 und 192 g/Äquivalent und eine Viskosität zwischen 11 und 14 Pa.s (11 000 und 14 000 cP) bei 25 °C aufweist.

8. Epoxidharzzusammensetzung gemäß einem der vorhergehenden Ansprüche, wobei der Diglycidylether von Bisphenol A ein Epoxid-Äquivalentgewicht zwischen 176 und 183 g/Äquivalent und eine Viskosität zwischen 9 und 10,5 Pa.s (9000 und 105 000 cP) bei 25 °C aufweist.

9. Ein Verfahren zum Verwenden der Epoxidharzzusammensetzung gemäß einem der vorhergehenden Ansprüche, beinhaltend das Einbringen der Epoxidharzzusammensetzung in eine Beschichtung, einen Klebstoff, ein Dichtungsmittel, einen Guss, ein Laminat oder einen Verbundstoff.

## Revendications

1. Une composition de résine époxy comprenant le produit de réaction d'un mélange comprenant entre 95 et 99 % en poids d'un composant époxy comprenant un ou plusieurs éthers diglycidyliques de bisphénol A et entre 1 et 5 % en poids d'un composant additif comprenant une ou plusieurs amines aromatiques, dans laquelle chaque amine aromatique ne contient pas plus de deux atomes d'hydrogène amine ; dans laquelle la composition de résine époxy fait preuve d'une inhibition de cristallisation améliorée par rapport à l'éther diglycidylique de bisphénol A.

2. La composition de résine époxy de la revendication 1 dans laquelle cette ou ces amines aromatiques sont sélectionnées parmi l'aniline, l'ortho-toluidine, la méta-toluidine, la para-toluidine, la 4-propylaniline, la 4-éthylaniline, la 3-chloroaniline, la 4-hydroxyaniline, la 3-cyanoaniline, la 2,4-diméthylaniline, la 2,6-diméthylaniline, la N,N'-diméthylbenzène-1,4-diamine, la 1-naphtalènamine, et des combinaisons et mélanges de ceux-ci.

3. La composition de résine époxy de n'importe lesquelles des revendications précédentes dans laquelle une ou plusieurs amines aromatiques comprennent de l'aniline.

4. La composition de résine époxy de la revendication 1 dans laquelle le mélange comprend entre 98,7 et 97,5 % en poids d'éther diglycidylique de bisphénol A et entre 1,3 et 2,5 % en poids d'amine aromatique.

5. La composition de résine époxy de la revendication 4 dans laquelle le mélange comprend 97,5 % en poids d'éther diglycidylique de bisphénol A et 2,5 % en poids d'aniline.

6. La composition de résine époxy de n'importe lesquelles des revendications précédentes dans laquelle l'éther diglycidylique de bisphénol A a un poids équivalent d'époxyde entre 172 et 176 g/équivalent et une viscosité entre 4 et 6 Pa·s (4 000 et 6 000 cP) à 25 °C.

7. La composition de résine époxy de n'importe lesquelles des revendications précédentes dans laquelle l'éther diglycidylique de bisphénol A a un poids équivalent d'époxyde entre 182 et 192 g/équivalent et une viscosité entre 11 et 14 Pa·s (11 000 et 14 000 cP) à 25 °C.

8. La composition de résine époxy de n'importe lesquelles des revendications précédentes dans laquelle l'éther diglycidylique de bisphénol A a un poids équivalent d'époxyde entre 176 et 183 g/équivalent et une viscosité entre 9 et 10,5 Pa·s (9 000 et 10 500 cP) à 25 °C.

9. Une méthode pour utiliser la composition de résine époxy de n'importe lesquelles des revendications précédentes comprenant le fait d'incorporer la composition de résine époxy dans un revêtement, un adhésif, un produit d'étanchéité, une pièce coulée, un stratifié, ou un composite.
